# FASCICULE DE BREVET EUROPEEN

(11) **EP 2 084 050 B1**
(45) Date de publication et mention de la délivrance du brevet: **29.12.2010**
(21) Numéro de dépôt: 06831284.2
(22) Date de dépôt: 23.10.2006
(51) Int. Cl.: B62D 5/09

(54) **SYSTÈME DE DIRECTION ASSURANT LA COMMANDE DE L'ANGLE DE BRAQUAGE DES ROUES DIRECTRICES D'UN VÉHICULE**
LENKSYSTEM ZUR STEUERUNG DES DREHWINKELS DER LENKRÄDER EINES FAHRZEUGS
STEERING SYSTEM FOR CONTROLLING THE TURNING ANGLE OF THE STEERING WHEELS OF A VEHICLE

(43) Date de publication de la demande: 05.08.2009
(73) Titulaire: RENAULT TRUCKS, 69800 Saint Priest (FR)
(72) Inventeur: DORAY, Jean-Baptiste, 38670 Chasse Sur Rhone (FR)
(74) Mandataire: Putet, Gilles
(86) Numéro de dépôt international: PCT/FR2006/051089
(87) Numéro de publication internationale: WO 2008/049979

(56) Documents cités:
- WO-A-2004/009425
- DE-A1- 10 255 066

## Description

### Domaine technique

L'invention se rattache au domaine des systèmes de commande de direction équipant les véhicules automobiles, et notamment les véhicules industriels, tels que les camions. Elle concerne plus spécifiquement les systèmes de direction dans lesquels le braquage des roues n'est pas obtenu par une transmission mécanique, mais par l'intermédiaire de dispositifs transmettant par voie électrique voire hydraulique les ordres donnés par le conducteur. Ces systèmes de direction sont connus sous l'appellation générale de "Steer by Wire". L'invention vise plus particulièrement un perfectionnement au mode de contrôle/commande de certains types de dispositif "Steer by Wire".

### Techniques antérieures

De façon générale, les systèmes de direction type "Steer by Wire" sont tout particulièrement conçus en prenant en compte des préoccupations relatives à la fiabilité, dans la mesure où la direction est une fonction sécuritaire, et que ces systèmes mettent en oeuvre de multiples composants électroniques assurant des calculs nombreux et complexes.

Ainsi, il a déjà été proposé de doubler les circuits électro hydrauliques et la commande associée, dans un but de redondance, et afin de supplanter un circuit par l'autre lorsque l'un devient défaillant. Ainsi, le document WO 2004/009425 décrit un système de commande de direction selon le préambule de la revendication 1, qui comporte deux circuits électro hydrauliques fonctionnant simultanément. Chacun de ces circuits inclut un actionneur agissant sur l'angle de braquage des roues. Les deux actionneurs sont mécaniquement couplés de telle sorte qu'en cas de défaillance d'un des circuits électro hydrauliques (ou de la commande associée), l'autre circuit prend le relais.

Dans la mesure où les deux actionneurs sont mécaniquement couplés, il est nécessaire de mettre en oeuvre des stratégies d'asservissement différentes. Ainsi, un premier actionneur est asservi en déplacement, tandis que le second est asservi en effort. De la sorte, lorsque les circuits sont dimensionnés de manière analogue, chacun fournit sensiblement la moitié de la puissance nécessaire pour assurer le braquage des roues. Or, des phénomènes d'instabilité peuvent se manifester lorsque les commandes des deux circuits ne sont pas exactement synchronisées, en particulier à cause de temps de réaction et d'inertie différents d'un circuit à l'autre.

Ainsi, dans le cas particulier où le circuit hydraulique inclut des électrovannes dites à "centre fermé", des difficultés particulières peuvent apparaître.

En effet, les valves à centre fermé sont telles qu'au repos, elles ne permettent pas le passage de fluide à destination de l'actionneur. Ainsi, dans la mesure où les actionneurs sont mécaniquement couplés, l'amorce de l'ouverture d'une électrovanne ne permet pas le passage de fluide si l'électrovanne complémentaire de l'autre circuit n'est pas également dans le même état d'ouverture.

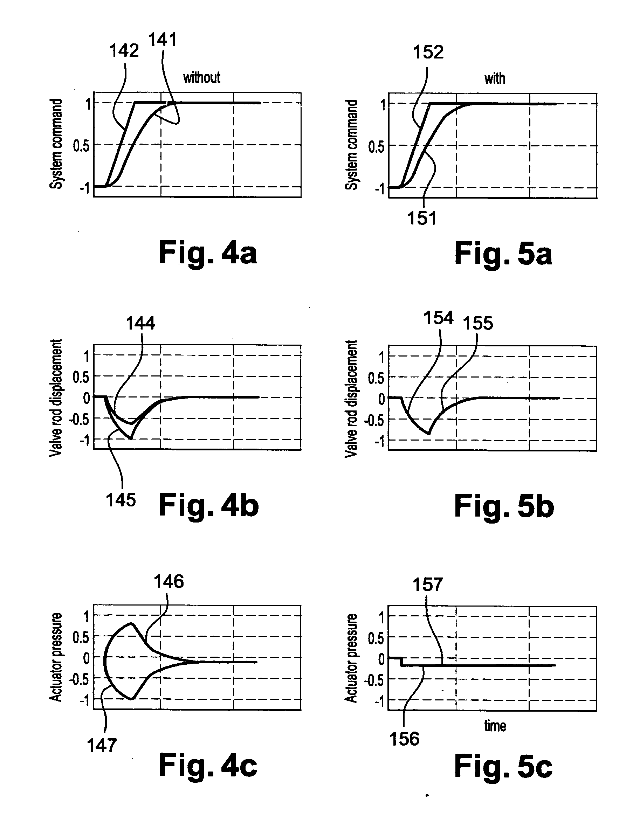

Autrement dit, si une électrovanne commence à s'ouvrir alors que l'autre reste encore fermée pendant une fraction de seconde, l'écoulement du fluide ne peut avoir lieu, et tout se passe comme si l'électrovanne déjà ouverte était restée fermée. On conçoit donc que ces décalages d'actionnement peuvent provoquer des difficultés de pilotage, ou voire des instabilités préjudiciables à un bon pilotage du système. On a représenté à la figure 4a un chronogramme montrant sur une échelle normalisée, l'évolution dans le temps de l'angle de braquage des roues, représentée par la courbe 141, en réponse à une consigne correspondant à une rotation du volant, représentée par la courbe 142. La figure 4b illustre, selon une échelle normalisée, le déplacement des tiroirs des électrovannes des vannes des deux circuits asservis différemment. Pour le circuit asservi en déplacement (courbe 143), on note que l'amplitude du déplacement du tiroir de l'électrovanne est légèrement anticipé, et de plus forte amplitude que le déplacement (courbe 144) du tiroir de l'électrovanne du circuit asservi en effort. La figure 4c illustre les valeurs d'effort évaluées pour chaque circuit. On constate de façon surprenante, qu'au début de la réponse, l'effort (courbe 146) exercé dans le circuit asservi en effort est non pas égal, mais opposé à l'effort (courbe 147) exercé dans le circuit asservi en déplacement. Autrement dit, à cause des imperfections de ce mode de commande, le circuit asservi en effort, qui est censé assister le circuit asservi en déplacement, ne remplit pas cette fonction, mais au contraire subit un effort de la part du circuit asservi en position, jusqu'à atteindre un fonctionnement nominal. Il s'ensuit une consommation supplémentaire d'énergie qui n'est pas convertie en énergie cinétique.

Un décalage dans les ordres de commande des deux électrovannes est quasi inévitable, dans la mesure où les deux asservissements fonctionnent sur des variables de natures différentes, mesurées par des capteurs de nature différente.

En effet, le circuit asservi en déplacement emploie un capteur de distance, mesurant la course effectuée par l'actionneur. A l'inverse, le circuit asservi en effort utilise plusieurs capteurs de pression, montés sur les différentes chambres des deux actionneurs. Les capteurs de pression étant de conception différente des capteurs de déplacement, on conçoit qu'ils engendrent une différence de temps de réaction des deux circuits de commande.

### Exposé de l'invention

L'invention concerne donc un système de direction assurant la commande de l'angle de braquage des roues directrices d'un véhicule. De manière connue, un tel système comporte deux circuits électro hydrauliques incluant chacun un actionneur. Les deux actionneurs sont mécaniquement couplés et agissent simultanément sur l'angle de braquage des roues. Un premier des deux circuits est asservi en déplacement par rapport à une consigne de position, tandis que le second circuit est asservi en effort.

Conformément à l'invention, ce système se **caractérise en ce que** la consigne appliquée sur le second circuit comporte une composante élaborée à partir d'un filtrage de la consigne de position appliquée au premier circuit.

Autrement dit, le circuit qui asservi en effort, réagit également à la commande en position, pour des phases transitoires, permettant d'éviter des phénomènes de blocage.

Le fonctionnement du second circuit n'est donc pas simplement le résultat d'un asservissement en effort, mais prend en compte partiellement la commande en déplacement qui agit sur l'autre circuit. Ainsi, comme l'asservissement en effort est généralement plus lent que l'asservissement en déplacement, l'ajout de cette composante caractéristique supplémentaire permet d'anticiper les mouvements de ses électrovannes, par rapport à une configuration de l'Art antérieur, et notamment celle décrite dans le document WO 2004/09425.

En pratique, la composante caractéristique élaborée à partir du filtrage de la consigne de position peut inclure un filtrage du type passe-haut. En d'autres termes, l'injection de cette composante caractéristique permet de faire réagir l'asservissement en effort de manière rapide aux évolutions de la consigne de déplacement. Autrement dit, l'invention permet donc au circuit asservi en effort de voir ses électrovannes se déplacer quasiment aussi rapidement que celles du circuit asservi en déplacement.

Avantageusement en pratique, l'asservissement en effort du second circuit peut inclure un filtrage passe-bas de la mesure d'effort effectuée sur le ou les actionneurs, de manière à découpler en fréquence l'influence de la composante supplémentaire caractéristique de la composante principale d'asservissement en effort. En d'autres termes, pour les mouvements de braquage rapide, le circuit asservi en effort réagit principalement grâce à la composante supplémentaire basée sur la consigne de position.

A l'inverse, dans une bande de fréquence basse, pour des mouvements quasi statiques, le circuit principalement asservi en effort n'est plus sensible à la commande en position, mais bien à sa boucle principale interfacée avec le capteur de pression.

Une telle architecture de commande permet de compenser les décalages préjudiciables évoqués pour les circuits utilisant des vannes à centres fermés. Toutefois, il peut également présenter un intérêt d'amélioration de la réactivité pour des circuits utilisant des vannes à centres ouverts.

Avantageusement en pratique, chaque circuit électro hydraulique peut être commandé par une unité de contrôle/commande qui lui est propre, dans un souci de redondance et d'augmentation de la fiabilité.

Avantageusement en pratique, la consigne de position peut être élaborée à partir d'un organe de commande de la direction sur lequel agit le conducteur.

En pratique, le système peut comprendre au moins un capteur mesurant le déplacement de l'un ou l'autre des actionneurs, ainsi que plusieurs capteurs mesurant les pressions régnant dans les chambres des actionneurs.

Selon une première forme de réalisation, la consigne de position peut être transmise aux unités électroniques de contrôle/commande, affectée chacune à un circuit électro hydraulique. Dans ce cas, avantageusement, les signaux issus du ou des capteurs mesurant le déplacement de l'un ou l'autre des actionneurs sont acheminés aux deux unités électroniques de contrôle/commande affectée à chacun des circuits électro-hydrauliques.

Dans une autre forme de réalisation, les signaux issus du ou des capteurs mesurant le déplacement de l'un ou l'autre des actionneurs sont acheminés à l'unité électronique de contrôle/commande affectée au circuit électro-hydraulique fonctionnant avec l'asservissement en déplacement, ladite unité transmettant à l'autre unité un signal représentatif de la différence entre la consigne de position et la mesure du déplacement.

Ainsi, selon le cas, la composante appliquée au second circuit et qui est élaborée à partir du filtrage de la consigne de position, peut prendre en compte directement la même consigne de déplacement que celle qui est utilisée pour le premier circuit. Mais il est également possible qu'elle soit élaborée à partir d'un signal d'écart utilisé pour l'asservissement en déplacement du premier circuit, c'est-à-dire indirectement à partir de la consigne de déplacement, à laquelle a été soustraite la mesure effective de déplacement.

### Description sommaire des figures

La manière de réaliser l'invention, ainsi que les avantages qui en découlent ressortiront bien de la description du mode de réalisation qui suit, à l'appui des figures annexées, dans lesquelles :
La figure 1 est un schéma illustrant de manière simplifiée, les différents éléments intervenant dans le fonctionnement du système conforme à l'invention.
Les figures 2 et 3 sont des schémas dérivés de la figure 1, montrant deux variantes de réalisation de l'invention.
Les figures 4a à 4c sont des chronogrammes illustrant de façon normalisée et pour un système de l'art antérieur correspondant au document WO 2004/09425, respectivement:
   - l'évolution du déplacement de la tige du vérin agissant sur l'angle de braquage pour une consigne en rampe;
   - l'évolution des déplacements des tiroirs des électrovannes des deux circuits;
   - l'évolution des efforts mesurés dans les deux circuits
Les figures 5a à 5c sont des chronogrammes analogues à ceux des figures 4a à 4c respectivement, pour un système conforme à l'invention.

### Manière de réaliser l'invention

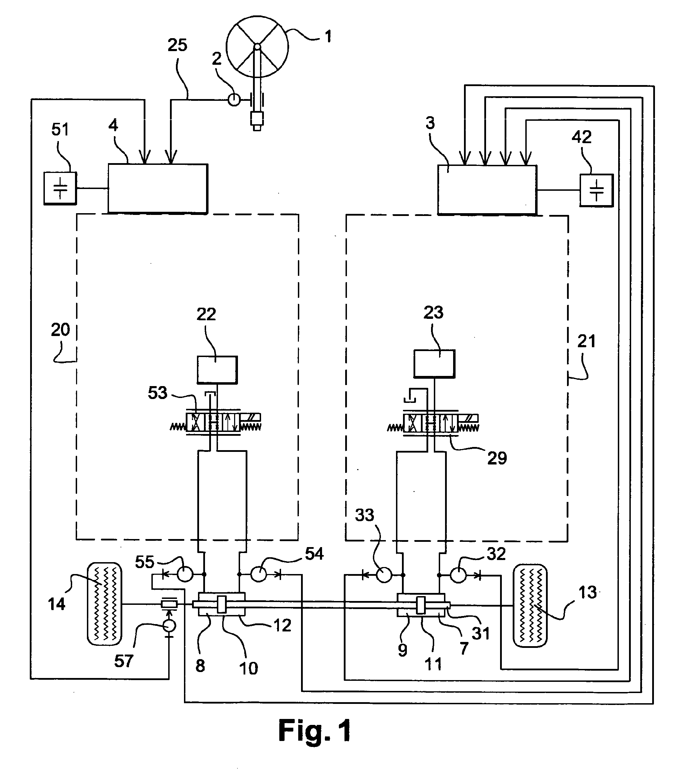

Le système illustré à la figure 1 est similaire à celui décrit dans le document WO 2004/09425. Ainsi, de façon résumée, un tel système de direction comprend un volant 1 dont l'angle de rotation peut être déterminé par un capteur 2 qui délivre l'information correspondante à des calculateurs électroniques 3, 4, agissant eux-mêmes sur des circuits électro hydrauliques 20, 21 à partir d'une ou plusieurs sources 22, 23 de fluide sous pression. Plus précisément, ces deux circuits électro-hydrauliques 20, 21 incluent chacun une électrovanne proportionelle 53, 29 à centre fermé, qui, en fonction des ordres de commande qui lui sont appliqués, délivre une quantité de fluide à un actionneur 10, 11 du type vérin, agissant sur l'angle de braquage des roues 13, 14. En pratique, les deux actionneurs sont couplés dans la mesure où les vérins forment un unique vérin quatre chambres 8, 12, 9, 7, agissant sur une tige unique 31.

Des mécanismes appropriés, qu'il n'est pas nécessaire de décrire en détail transmettent le mouvement de ce vérin au niveau de l'essieu directeur.

La commande des deux circuits électro hydrauliques 20, 21 s'effectue au moyen d'asservissements prenant en compte des informations issues de capteurs interfacés avec les actionneurs. Plus précisément, un capteur de déplacement 57 permet de mesurer le déplacement de la tige du vérin, et/ou encore d'un autre élément dont la position est directement liée au déplacement de ce vérin. Cette mesure de déplacement est utilisée pour l'asservissement du premier circuit électro hydraulique 20, qui est donc asservi en position.

Complémentairement, des capteurs de pression 55, 54, 33, 32 sont installés au niveau des différentes conduites reliées sur chacune des chambres 8, 12, 9, 7 des actionneurs, de manière à évaluer le niveau de pression régnant dans ces chambres, et ainsi donc, le niveau d'effort exercé au niveau du vérin. Ces mesures d'efforts permettent d'asservir le second circuit hydraulique 21, dans la mesure où il n'est pas possible d'asservir les deux circuits vis-à-vis de la même variable de déplacement, puisqu'ils sont mécaniquement couplés.

Comme déjà évoqué, le perfectionnement de la présente invention par rapport au système décrit dans le document WO 04/09425 consiste à assurer une commande du second circuit électro hydraulique 21 non seulement à partir d'une consigne d'effort, mais également à partir d'une consigne issue de la commande en position de l'autre circuit.

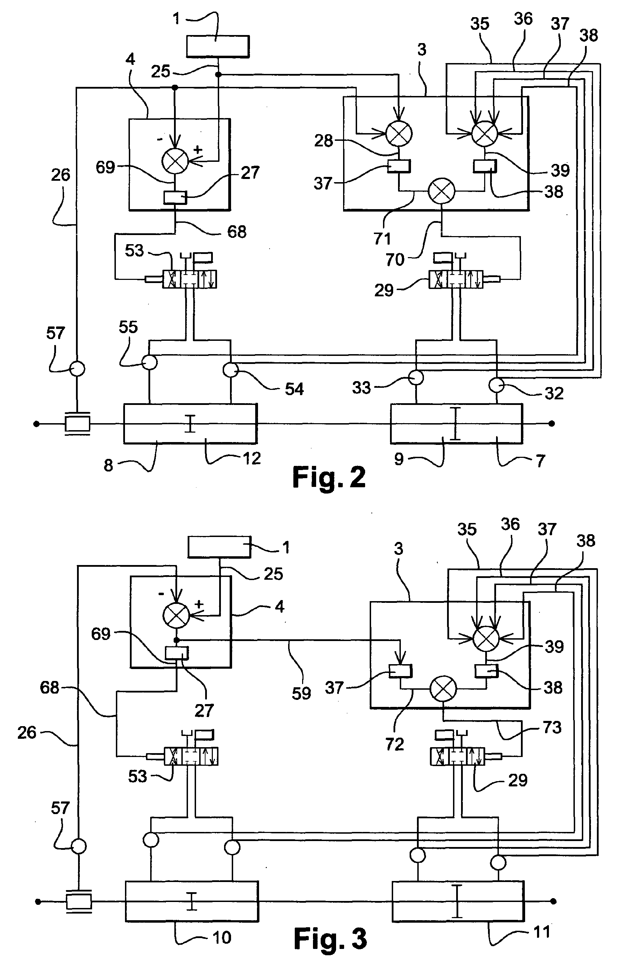

Plus précisément, et comme illustré à la figure 2, la commande de l'électrovanne 53 du premier circuit, est réalisée par l'intermédiaire d'un calculateur, ou d'une unité de contrôle/commande électronique 4. Dans ce calculateur est implanté, de façon logicielle, matérielle ou mixte, un asservissement prenant en compte une consigne de position 25 élaborée par exemple à partir de l'information représentative de la rotation du volant 1. Cette consigne de position peut également provenir d'un système de commande assistée ou automatique de trajectoire.

Cette consigne de position 25 est comparée avec la mesure de déplacement 26 élaborée par le capteur 57, pour donner un signal d'écart 69. Le signal de commande 68 délivré à l'électrovanne 53 peut résulter de différents filtrages du type PID 27 ou saturation, qui peuvent également être implémentés pour assurer un asservissement satisfaisant.

Conformément à l'invention, la commande 70 de l'asservissement du second circuit électro hydraulique 21 prend en compte non seulement des informations 39 relatives aux efforts exercés dans les différentes chambres 8, 12, 9, 7 des vérins, mais également une composante 71 élaborée à partir de la consigne de position 25 également appliquée au premier circuit.

Plus précisément, une première composante 39 de l'asservissement du second circuit 21 prend en compte l'ensemble des informations 35, 38 issues des capteurs de pression 32, 33, 54, 55 mesurant la pression régnant dans les différentes chambres des actionneurs. Les valeurs de pression 37, 38 mesurées au niveau du premier actionneur sont prises en compte de manière additive, tandis que les pressions 35, 36 du second actionneur le sont de façon soustractive, de manière à assurer l'égalité des efforts produits au niveau des deux vérins.

Complémentairement, cet asservissement prend en compte une composante 71 élaborée, dans la forme illustrée préférentiellement après filtrage 37, à partir de l'écart 28 entre la consigne de position 25 et la mesure 26 du déplacement effectif issue du capteur de déplacement 57. Dans la forme illustrée à la figure 2, l'unité de contrôle/commande électronique 3 dédiée au second circuit 21, traite directement ces informations. Toutefois, dans la forme de réalisation illustrée à la figure 3, ces informations sont traitées uniquement par l'unité de contrôle/commande 4 affectée au premier circuit 20, qui élabore ainsi une signal d'erreur de position 59, lui-même utilisé par l'unité de contrôle/commande 3 affectée au second circuit 21.

Conformément à une caractéristique de l'invention, des filtrages fréquentiels peuvent être réalisés sur les deux composantes d'écart en effort 39 et en position 28 utilisées dans l'asservissement du second circuit 21. Ainsi, la composante d'écart 28 issue de la commande en position subit un filtrage passe-haut 37, ce qui permet d'injecter dans l'asservissement du second circuit une composante 71 relative à la partie dynamique de commande en position.

De façon complémentaire, les informations de pression 39, représentatives de l'effort utilisé par l'asservissement du second circuit 21 subissent un filtrage passe-bas 38, de manière à éviter des interférences entre les effets de ces deux composantes 28, 39 dans une bande de fréquence commune. De la sorte, les variations rapides de la consigne 25 de position sont prises en compte rapidement par l'asservissement du second circuit, et plus rapidement qu'avec la dynamique imposée par les montées en pression des chambres des vérins 8, 12, 9, 7, et la détection par les capteurs de pression 54, 55, 32, 33.

L'électrovanne 29 du second circuit 21 se trouve donc commandée plus rapidement que si elle n'était asservie qu'en effort. Cette anticipation permet d'éviter les situations dans lesquelles l'électrovanne 53 du premier circuit 20 se trouve ouverte, mais dans laquelle le fluide ne peut circuler dans le vérin, puisque l'électrovanne 29 du second circuit est encore fermée, et empêche donc tout mouvement de la tige 31 du vérin.

En d'autres termes, l'invention permet d'éviter que la dynamique du système global soit imposée par le second circuit 21, qui est le plus lent à réagir.

En pratique, le filtrage 37, 38 effectué sur les différentes composantes peut être un filtrage du type de premier ou second ordre avec une fréquence de coupure déterminée. Il peut également s'agir d'un filtrage plus perfectionné du type filtrage de Kalman ou analogue.

En pratique, la fréquence de coupure de ce filtrage peut être déterminée en fonction de la technologie des vannes employées, et notamment de la dynamique associée. Ainsi, sur les vannes à commande électro hydraulique servovalve, la fréquence de coupure peut être de l'ordre de quelques dizaines de Hertz. Cette fréquence peut être inférieure dans l'emploi de vannes à commande électrique directe. Dans ce cas, une fréquence de coupure de quelques Hertz peut être suffisante.

En pratique, les avantages de l'invention apparaissent bien en comparant les différents signaux représentatifs du fonctionnement de l'invention, avec les mêmes signaux pour des solutions de l'art antérieur. Ainsi, comme illustré à la figure 5a, l'évolution dans le temps de l'angle de braquage des roues, représentée par la courbe 151, en réponse à une consigne correspondant à une rotation du volant, représentée par la courbe 152. On remarque que ces courbes sont très semblables à celle mesurées dans l'art antérieur, tel qu'illustré à la figure 4a. En revanche, les déplacements des tiroirs des électrovannes des vannes des deux circuits asservis sont représentés par deux courbes quasiment confondues (courbes 154 et 155), ce qui montre bien que l'asservissement selon l'invention permet d'obtenir des comportements quasi-identiques pour les électrovannes des deux circuits. Par conséquent, et comme illustré à la figure 4c illustre, les valeurs d'effort (courbes 156 et 157) évaluées pour chaque circuit sont identiques, ce qui signifie que le circuit asservi en effort fournit un effort égal à celui développé par le circuit asservi en déplacement, et ce dès le début du mouvement des tiroirs des électrovannes. L'assistance du premier circuit par le second est donc effective immédiatement, sans surconsommation d'énergie.

Il ressort de ce qui précède que la présente invention présente l'avantage de permettre un fonctionnement dynamique optimisé des systèmes de direction du type "Steer by Wire", comportant deux circuits hydrauliques couplés commandés en déplacement et en effort.

## Revendications

1. Système de direction assurant la commande de l'angle de braquage des roues (13, 14) directrices d'un véhicule, comportant deux circuits électro hydrauliques (20, 21) incluant chacun un actionneur, les deux actionneurs (10, 11) étant mécaniquement couplés et agissant simultanément sur l'angle de braquage des roues, un premier (20) des deux circuits étant asservi en déplacement par rapport à une consigne de position (25), le second circuit (21) étant asservi en effort, **caractérisé en ce que** la consigne (70;73) appliquée au second circuit comporte une composante (71;72) élaborée à partir d'un filtrage de ladite consigne (25) de position.

2. Système de direction selon la revendication 1, **caractérisé en ce que** la composante (72) élaborée à partir d'un filtrage de la consigne (25) de position est élaborée à partir d'un signal d'écart (69) utilisé pour l'asservissement en déplacement du premier circuit.

3. Système de direction selon la revendication 1, **caractérisé en ce que** la composante (71,72) élaborée à partir d'un filtrage de la consigne (25) de position inclut un filtrage passe-haut (37).

4. Système de direction selon la revendication 1, **caractérisé en ce que** l'asservissement en effort du second circuit inclut un filtrage passe-bas (38) de la mesure d'efforts (39) effectués sur le ou les actionneurs (10, 11).

5. Système de direction selon la revendication 1, **caractérisé en ce que** les circuits hydrauliques (20, 21) comportent des électrovannes (53, 29) de commande des actionneurs du type "à centre fermé".

6. Système de direction selon la revendication 1, **caractérisé en ce que** chaque circuit électro hydraulique est commandé par une unité électronique de contrôle commande (3, 4) spécifique.

7. Système de direction selon la revendication 1, **caractérisé en ce que** la consigne de position (25) est élaborée à partir d'un organe (1) de commande de la direction sur lequel agit le conducteur.

8. Système de direction selon la revendication 1, **caractérisé en ce qu'**il comprend au moins un capteur (57) mesurant le déplacement de l'un ou l'autre des actionneurs (10,11).

9. Système de direction selon la revendication 1, **caractérisé en ce qu'**il comprend plusieurs capteurs (32,33,54,55) mesurant les pressions régnant dans les chambres (7,8,9,12) des actionneurs.

10. Système de direction selon la revendication 6, **caractérisé en ce que** la consigne de position (25) est transmise aux unités électroniques de contrôle/commande (3,4), affectée chacune à un circuit électro hydraulique.

11. Système de direction selon les revendications 6 et 8, **caractérisé en ce que** les signaux (26) issus du ou des capteurs (57) mesurant le déplacement de l'un ou l'autre des actionneurs sont acheminés aux deux unités électroniques de contrôle/commande (3,4) affectée à chacun des circuits électro-hydrauliques.

12. Système de direction selon les revendications 6 et 8, **caractérisé en ce que** les signaux (26) issus du ou des capteurs mesurant le déplacement de l'un ou l'autre des actionneurs sont acheminés à l'unité électronique (2) de contrôle/commande affectée au circuit électro hydraulique (20) fonctionnant avec l'asservissement en déplacement, ladite unité transmettant à l'autre unité (3) un signal (59) représentatif de la différence entre la consigne de position (25) et la mesure (26) du déplacement.

## Claims

1. A steering system controlling the turning angle of the steering wheels (13, 14) of a vehicle, comprising two electrohydraulic circuits (20, 21) each including an actuator, the two actuators (10, 11) being mechanically coupled and acting simultaneously on the turning angle of the wheels, a first circuit (20) of the two circuits being displacement-controlled relative to a position instruction (25), the second circuit (21) being stress-controlled, **characterized in that** the instruction (70; 73) applied to the second circuit comprises a component (71; 72) developed from a filtering of said position instruction (25).

2. The steering system as claimed in claim 1, **characterized in that** the component (72) developed from a filtering of the position instruction (25) is developed from a deviation signal (69) used for the displacement control of the first circuit.

3. The steering system as claimed in claim 1, **characterized in that** the component (71, 72) developed from a filtering of the position instruction (25) includes a high-pass filtering (37).

4. The steering system as claimed in claim 1, **characterized in that** the stress control of the second circuit includes a low-pass filtering (38) of the measurement of stresses (39) applied to the actuator or actuators (10, 11).

5. The steering system as claimed in claim 1, **characterized in that** the hydraulic circuits (20, 21) comprise solenoid valves (53, 29) for controlling the actuators of the "closed-center" type.

6. The steering system as claimed in claim 1, **characterized in that** each electrohydraulic circuit is controlled by a specific electronic command and control unit (3, 4).

7. The steering system as claimed in claim 1, **characterized in that** the position instruction (25) is developed from a control member (1) of the steering on which the driver acts.

8. The steering system as claimed in claim 1, **characterized in that** it comprises at least one sensor (57) measuring the displacement of one or the other of the actuators (10, 11).

9. The steering system as claimed in claim 1, **characterized in that** it comprises several sensors (32, 33, 54, 55) measuring the pressures prevailing in the chambers (7, 8, 9, 12) of the actuators.

10. The steering system as claimed in claim 6, **characterized in that** the position instruction (25) is transmitted to the electronic command and control units (3, 4) each assigned to one electrohydraulic circuit.

11. The steering system as claimed in claims 6 and 8, **characterized in that** the signals (26) originating from the sensor or sensors (57) measuring the displacement of one or other of the actuators are conveyed to the two electronic command and control units (3, 4) each assigned to electrohydraulic circuits.

12. The steering system as claimed in claims 6 and 8, **characterized in that** the signals (26) originating from the sensor or sensors measuring the displacement of one or other of the actuators are conveyed to the electronic command and control unit (2) assigned to the electrohydraulic circuit (20) operating with the displacement-control, said unit transmitting to the other unit (3) a signal (59) representative of the difference between the position instruction (25) and the displacement measurement (26).

## Patentansprüche

1. Lenksystem zur Gewährleistung der Steuerung des Einschlagwinkels der gelenkten Räder (13, 14) eines Fahrzeugs, das zwei elektrohydraulische Kreise (20, 21) umfasst, die jeweils ein Stellglied aufweisen, wobei die beiden Stellglieder (10, 11) mechanisch gekoppelt sind und gleichzeitig auf den Einschlagwinkel der Räder einwirken, wobei der erste (20) der beiden Kreise nach der Verschiebung bezogen auf eine Positionsstellgröße (25) geregelt wird und der zweite Kreis (21) nach der Belastung geregelt wird, **dadurch gekennzeichnet, dass** die an den zweiten Kreis angelegte Stellgröße (70; 73) eine Komponente (71; 72) umfasst, die ausgehend von einer Filterung der Positionsstellgröße (25) ermittelt wird.

2. Lenksystem nach Anspruch 1, **dadurch gekennzeichnet, dass** die ausgehend von einer Filterung der Positionsstellgröße (25) ermittelte Komponente (72) ausgehend von einem Abweichungssignal (69) ermittelt wird, das für die Regelung nach der Verschiebung des ersten Kreises verwendet wird.

3. Lenksystem nach Anspruch 1, **dadurch gekennzeichnet, dass** die ausgehend von einer Filterung der Positionsstellgröße (25) ermittelte Komponente (71, 72) eine Hochpassfilterung (37) umfasst.

4. Lenksystem nach Anspruch 1, **dadurch gekennzeichnet, dass** die Regelung nach der Belastung des zweiten Kreises eine Tiefpassfilterung (38) der Messung der auf das oder die Stellglieder (10, 11) ausgeübten Belastungen (39) umfasst.

5. Lenksystem nach Anspruch 1, **dadurch gekennzeichnet, dass** die Hydraulikkreise (20, 21) Elektroventile (53, 29) zur Steuerung der Stellglieder des Typs "mit gesperrter Mittelstellung" aufweisen.

6. Lenksystem nach Anspruch 1, **dadurch gekennzeichnet, dass** jeder elektrohydraulische Kreis von einer spezifischen Kontrollsteuerungseinheit (3, 4) gesteuert ist.

7. Lenksystem nach Anspruch 1, **dadurch gekennzeichnet, dass** die Positionsstellgröße (25) ausgehend von einem Lenkungssteuerteil (1) ermittelt wird, auf das der Fahrer einwirkt.

8. Lenksystem nach Anspruch 1, **dadurch gekennzeichnet, dass** es wenigstens einen Sensor (57) umfasst, der die Verschiebung des einen oder des anderen Stellglieds (10, 11) misst.

9. Lenksystem nach Anspruch 1, **dadurch gekennzeichnet, dass** es mehrere Sensoren (32, 33, 54, 55) umfasst, die die in den Kammern (7, 8, 9, 12) der Stellglieder vorherrschenden Drücke misst.

10. Lenksystem nach Anspruch 6, **dadurch gekennzeichnet, dass** die Stellgröße (25) an die elektronischen Kontroll-/Steuerungseinheiten (3, 4) übermittelt wird, die je einem elektrohydraulischen Kreis zugeordnet sind.

11. Lenksystem nach Anspruch 6 und 8, **dadurch gekennzeichnet, dass** die von dem oder den die Verschiebung des einen oder des anderen Stellglieds messenden Sensoren (57) abgegebenen Signale (26) an die zwei elektronischen Kontroll-/Steuerungseinheiten (3, 4) übermittelt werden, die jedem der elektrohydraulischen Kreise zugeordnet sind.

12. Lenksystem nach Anspruch 6 und 8, **dadurch gekennzeichnet, dass** die von dem oder den die Verschiebung des einen oder des anderen Stellglieds messenden Sensoren abgegebenen Signale (26) an die elektronische Kontroll-/Steuerungseinheit (2) übermittelt werden, die dem elektrohydraulischen Kreis (20) zugeordnet ist, der mit der Regelung nach der Verschiebung wirkt, wobei die Einheit an die andere Einheit (3) ein Signal (59) übermittelt, das die Differenz zwischen der Positionsstellgröße (25) und der Messung (26) der Verschiebung repräsentiert.
